# FASCICULE DE BREVET EUROPEEN

(11) **EP 3 806 682 B1**
(45) Date de publication et mention de la délivrance du brevet: **14.09.2022**
(21) Numéro de dépôt: 19737858.1
(22) Date de dépôt: 13.06.2019
(51) Int. Cl.: A41C 3/00, A41C 3/12, A41H 1/00, A41H 3/00, G06Q 30/06, G06T 17/00, A41C 5/00

(54) **SOUTIEN-GORGE PERSONNALISÉ**
ANPASSBARER BÜSTENHALTER
CUSTOMISED BRASSIERE

(30) Priorité: 13.06.2018 FR 1855174
(43) Date de publication de la demande: 21.04.2021
(73) Titulaire: Endeer, 92000 Nanterre (FR)
(72) Inventeur: CHABAUD, Claire, 06000 Nice (FR)
(74) Mandataire: Fédit-Loriot
(86) Numéro de dépôt international: PCT/FR2019/051424
(87) Numéro de publication internationale: WO 2019/239068

(56) Documents cités:
- WO-A2-2009/137223
- US-A1- 2006 003 669
- US-A1- 2016 021 938
- US-A1- 2017 340 023
- US-B1- 6 575 811
- US-B1- 7 425 170
- Motard Geek: "Joyfit, le service d'impression 3D de soutiens-gorge sur-mesure", , 1 septembre 2014 (2014-09-01), pages 1-2, XP055358698, Extrait de l'Internet: URL:https://www.lesimprimantes3d.fr/joyfit -soutien-gorge-sur-mesure-impression-3d-20 140901/ [extrait le 2017-03-24]

## Description

La présente invention se rapporte à un soutien-gorge personnalisé pour respecter l'anatomie unique et préserver la santé des seins d'une utilisatrice.

Un soutien-gorge est un sous-vêtement généralement composé d'un corps textile comprenant deux bonnets pour loger chacun un sein, des armatures et des renforts pour maintenir et modeler le sein dans le bonnet et des bretelles pour fixer le soutien-gorge au buste de l'utilisatrice.

Une utilisatrice choisit un soutien-gorge, hors considération esthétique, en fonction de deux paramètres morphologiques principaux : son tour de poitrine et la profondeur du bonnet. Pourtant, de nombreuses femmes portent des soutiens-gorge mal ajustés à leur morphologie, d'une part parce que les tailles standardisées des soutiens-gorge ne leurs conviennent pas, et d'autre part parce que la poitrine d'une femme évolue avec le temps. En plus de l'inconfort, la contrainte exercée par les armatures métalliques sur les seins sont nocives pour la bonne circulation des lymphes.

Or, il est connu qu'un soutien-gorge mal ajusté peut avoir des conséquences néfastes sur la santé de la personne qui le porte, tel que des troubles musculo-squelettiques ou des problèmes de drainage lymphatique.

Une solution pour ces utilisatrices est alors d'acquérir des soutiens-gorge faits sur-mesure, auxquels on se réfère aussi sous le nom de soutiens-gorge personnalisés. Cependant, de par la complexité de fabrication d'un soutien-gorge sur-mesure, généralement réalisé de manière manuelle par assemblage de renforts, d'armatures et de coussinets intégrés dans un corps textile, leur obtention est relativement longue et coûteuse. De plus, à ce jour il n'existe pas de solution pour avoir des armatures respectueuses de la santé du sein. Celles-ci devraient suivre la naissance du sein et les côtes afin de répartir au mieux le poids sans effectuer de pression sur le sein et bloquer la circulation des lymphes. Le US6575811 divulgue le préambule de la revendication 1.

Le but de l'invention est donc de proposer un soutien-gorge modulaire avec un dos indépendant du bonnet gauche, lui-même indépendant du bonnet droit, et avec deux armatures uniques et indépendantes. Chaque bonnet est formé par une armature sur-mesure de soutien-gorge relativement simple et peu coûteux à produire, afin de proposer des soutiens-gorge adaptés et personnalisés pour la poitrine de l'utilisatrice sans contraindre les lymphes.

On propose un soutien-gorge personnalisé pour une utilisatrice, comprenant deux bonnets indépendants pour recevoir chacun un sein de l'utilisatrice, chaque bonnet étant fait d'un matériau élastique.

Chaque bonnet est amovible et le soutien-gorge comprend pour chaque bonnet un organe d'adaptation du bonnet à la forme du sein, en forme de tige courbe obtenue sur mesure de l'utilisatrice, ladite tige courbe étant adaptée pour épouser sur toute sa longueur la forme du sillon sous-mammaire jusqu'aux côtes de ladite utilisatrice, et s'étendant depuis le voisinage du sternum de l'utilisatrice jusqu'au voisinage du creux axillaire de l'utilisatrice, de sorte que ladite tige courbe étire le bonnet pour épouser la forme du sein jusqu'aux côtes ; ledit organe d'adaptation du bonnet à la forme du sein présente une forme sensiblement plate et une forme élargie à son extrémité axillaire au voisinage du creux axillaire, sensiblement en forme de spatule, pour reposer à plat contre les côtés de l'utilisatrice, en direction du creux axillaire.

Ainsi on peut obtenir un soutien-gorge personnalisé adapté à la morphologie de l'utilisatrice, assurant un maintien optimal, un confort amélioré et assurant notamment un meilleur drainage lymphatique de la zone mammaire.

Notamment, la tige courbe présente une forme assurant un bon positionnement du bonnet autour du sein sans blesser l'utilisatrice par son repos contre son torse et ses côtes tout en permettant de ne pas blesser les zones lymphatiques.

Chaque bonnet étant amovible, on peut sélectionner de manière indépendante chaque bonnet et dos pour réaliser un soutien-gorge personnalisé, ce qui permet notamment de personnaliser le soutien-gorge en tenant compte des asymétries entre les seins d'une même personne. En effet, on sait qu'environ 85% des femmes présentent une asymétrie mammaire. La séparation, par fixation amovible, des deux bonnets, entre eux et au reste du soutien-gorge, permet ainsi d'assurer un choix optimal de bonnet pour chaque sein de l'utilisatrice.

En outre, le fait que les bonnets décrits soient amovibles permet de réduire le nombre de tailles produites lors de la fabrication des soutiens-gorge. En effet, dans l'art antérieur, on sait qu'il existe, selon les standards, des tailles de tour de poitrine allant de 70 à 130, par incrément de 5, et des tailles de bonnets allant de A à K. Pour chaque bonnet, il convient théoriquement de produire autant de modèle que de tailles de tours de poitrines disponibles, afin d'obtenir pour chaque utilisatrice potentielle un soutien-gorge à la bonne taille. Or, ceci impose une production extrêmement coûteuse compte tenu du nombre de modèles différents à produire et des stocks De ce fait, peu de marques peuvent adresser l'ensemble des poitrines dû à la quantité des Unités de Vente nécessaires.

Le soutien-gorge selon l'invention permet ainsi, par la présence de bonnets, dos et armatures sur-mesure amovibles et personnalisés, de réduire la quantité de modèles à produire. En effet, on peut produire une pluralité de tailles de bonnets et dos amovibles, qui seront sélectionnés et assemblés aux soutiens-gorge, de manière personnalisée, par exemple en tenant compte de bretelles et de fixations dorsales adaptées au tour de poitrine. Une taille de dos pouvant aller avec tous les bonnets, et de même pour les bonnets entre eux, cela permet d'adresser toutes les tailles possibles, soit 143 tailles avec seulement 35 Unités de Vente, divisant les stocks nécessaires par 4.

En outre la détermination du bonnet n'est plus nécessairement effectuée selon un choix basé sur des critères standards tels que la taille de bonnet dont l'utilisatrice penserait connaître la taille adaptée à sa poitrine, mais sur d'autres critères, tel que des mesures prises directement sur l'utilisatrice, par photographie du sein, scanner 3D du sein ou tout autre technique adaptée.

Les soutiens-gorge selon l'invention peuvent ainsi être obtenus sans qu'il ne soit nécessairement fait référence à une taille standard du type tour de poitrine-bonnet mais à la forme et/ou volume du sein.

L'organe d'adaptation du bonnet à la forme du sein, dans ce mode de réalisation sous forme de tige courbe, permet en outre d'améliorer la personnalisation en contraignant le bonnet amovible et élastique, déjà sélectionné à une taille adaptée au sein correspondant de l'utilisatrice, afin que ce bonnet prenne la forme du sein de l'utilisatrice, sans contraindre le sein à une forme non naturelle.

En effet, la tige courbe selon l'invention se distingue des armatures de l'art antérieur, en ce que leur obtention sur mesure et leur forme telle que décrite permet de forcer le bonnet à prendre la forme naturelle du sein, tandis qu'une armature de l'art antérieur contraint le sein à la forme du bonnet.

En outre, la tige courbe selon l'invention est une tige courbée de manière tridimensionnelle, aussi appelée courbure 3D, et non limitée à une courbure dans un plan bidimensionnel, afin d'épouser la forme du sillon sous-mammaire au contact de la paroi thoracique de l'utilisatrice, et à venir en retour contre les côtes de l'utilisatrice jusque sous le creux axillaire. Ceci se distingue des armatures de l'art antérieur généralement courbée dans un plan bidimensionnel, que l'on peut aussi appeler courbure 2D, en forme d'arceau qui se place sur le sein.

En particulier, la tige courbe s'étend à son extrémité axillaire, sous le creux axillaire de l'utilisatrice. Autrement dit la tige courbe vient à son extrémité axillaire, en retour par rapport à la paroi thoracique, en appui contre une partie latérale de la cage thoracique de l'utilisatrice, sous le creux axillaire, aussi appelé aisselle.

En particulier, la tige courbe présente une direction d'extension à son extrémité axillaire orientée vers le creux axillaire, la tige courbe reposant à cette extrémité axillaire contre une partie latérale de la cage thoracique de l'utilisatrice.

Avantageusement et de manière non limitative, chaque bonnet comprend dans sa bordure inférieure, un fourreau pour recevoir ladite tige courbe associée. Ainsi la tige courbe peut être insérée de manière simple et fiable dans le bonnet associé. En outre, le fourreau du bonnet et la tige courbe associée permettent d'obtenir des soutiens-gorge présentant divers designs textiles tout en assurant un confort optimal.

Avantageusement et de manière non limitative, ledit fourreau est fait d'un ourlet sur toute la longueur de la bordure inférieure dudit bonnet, présentant au moins une ouverture latérale pour insérer ou retirer ladite tige courbe, et en ce qu'il comprend une gaine élastique dans ledit ourlet de sorte qu'il assure un maintien ferme de la tige courbe dans le bonnet. Ainsi, le fourreau peut être fait de manière relativement simple à partir du même matériau que le bonnet, étant d'une seule pièce avec le bonnet, présenter un coût de fabrication plus faible, et assurer un relativement bon maintien de la tige courbe dans le bonnet.

Avantageusement et de manière non limitative, chaque bonnet présente une portion latérale axillaire adaptée pour venir reposer en retour contre les côtes de l'utilisatrice sous le creux axillaire. Ainsi, le bonnet présente une forme optimisée pour permettre un maintien, un drainage lymphatique et un confort amélioré pour l'utilisatrice.

En particulier, le bonnet vient en retour contre une partie latérale de la cage thoracique de l'utilisatrice sensiblement sous le creux axillaire.

Avantageusement et de manière non limitative, le soutien-gorge comprend des bretelles réglables amovibles. Ceci permet de personnaliser encore plus le soutien-gorge en tenant compte notamment de la taille du buste et de la morphologie de l'utilisatrice.

Avantageusement et de manière non limitative, le soutien-gorge comprend un dispositif de maintien dorsal, comprenant deux bandes latérales, solidaires chacune d'un bonnet, solidarisées chacune à la bordure inférieure dudit bonnet, sensiblement au voisinage de l'extrémité latérale axillaire dudit bonnet, et une bande dorsale amovible, adaptée pour être fixé de manière amovible aux deux bandes latérales de fixation, à leurs extrémités libres respectives. Ainsi, on peut personnaliser le soutien-gorge en tenant compte du tour de buste de l'utilisatrice.

Ainsi, une utilisatrice peut réutiliser un soutien-gorge, après une période de prise ou de perte de poids, avec bonnet préservé, en changeant simplement la bande de maintien dorsal et /ou les bretelles amovibles.

Avantageusement et de manière non limitative, ladite bande dorsale amovible est faite d'un matériau élastique, ce qui permet d'assurer un confort accru et une meilleure adaptation du soutien-gorge aux fluctuations de tour de poitrine d'une utilisatrice.

L'invention concerne aussi un procédé d'obtention d'un soutien-gorge tel que décrit précédemment comprenant :
- une étape d'obtention d'une photographie de chaque sein d'une utilisatrice, par exemple par une prise de photo depuis un ordinateur personnel, un smartphone ou une tablette, ou par scanner 3D ou toute autre technique d'imagerie connue ;

Selon une mise en œuvre particulière, l'étape d'obtention du procédé peut comprendre tout autre moyen d'obtention d'informations permettant de caractériser les seins de l'utilisatrice, par exemple par l'acquisition d'informations fournies directement par l'utilisatrice, par exemple en réponse à un questionnaire précis sur la forme de ses seins qui permet de proposer un matching à une forme d'armatures demi-mesures ;
- une étape d'acquisition de données morphologiques de l'utilisatrice telles que sa taille et son poids, par exemple par traitement d'image des photographies obtenues ou par saisie des données directes par l'utilisatrice ;
- une étape de traitement de l'image de chaque sein, de sorte à définir des paramètres représentatifs du volume, de la forme et de la courbure de chaque sein, ainsi que la définition de la courbure tridimensionnelle du sillon sous-mammaire ;
- pour chaque sein, une étape de sélection d'un bonnet adapté en fonction des données morphologiques et des photographies obtenues ;
- pour chaque sein, une étape de définition d'un organe d'adaptation du bonnet associé à la forme du sein correspondant en fonction des données morphologique et des photographies obtenues, comprenant la définition de la courbure tridimensionnelle de la tige courbe et de l'élargissement latéral axillaire de ladite tige courbe ; et
- une étape de détermination de bretelles et d'une bande dorsale adaptée.

L'invention concerne aussi un procédé de fabrication d'un organe d'adaptation tel que décrit précédemment comprenant :
- une étape de réception de données de définition dudit organe d'adaptation comprenant des données de courbure tridimensionnelles de la tige courbe, par exemple des données paramétriques ; et
   - une étape d'impression 3D de ladite tige courbe ou tout autre procédé personnalisé, ou de production industrielle classique D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
   - la figure 1 est une vue éclatée d'un soutien-gorge selon un mode de réalisation de l'invention ;
   - la figure 2 est une autre vue du soutien-gorge selon la mode de réalisation de la figure 1 avec les bonnets positionnés sur le torse d'une utilisatrice ;
   - la figure 3a est une vue d'un organe d'adaptation du bonnet à la forme du sein d'une utilisatrice du soutien-gorge selon le mode de réalisation de la figure 1 ; et
   - la figure 3b est une autre vue d'un organe d'adaptation du bonnet du soutien-gorge selon le mode de réalisation de la figure 1.

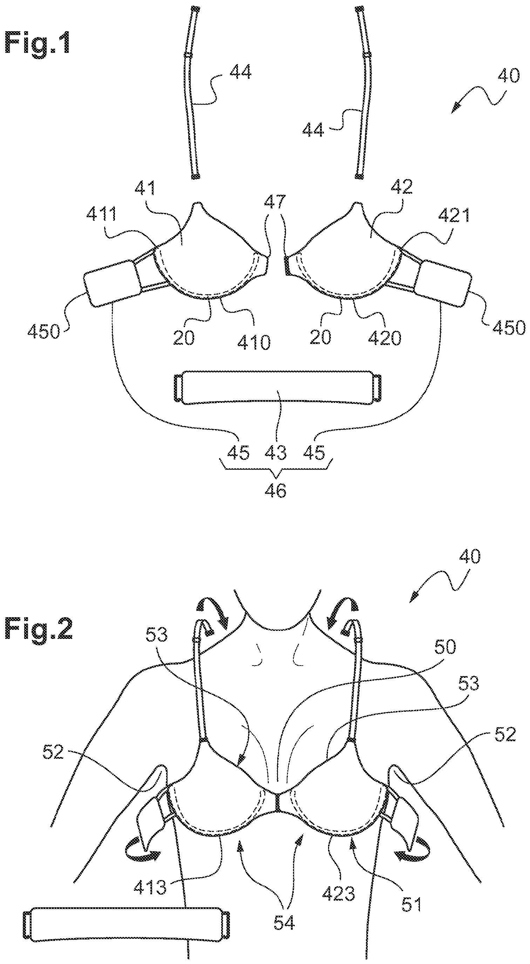

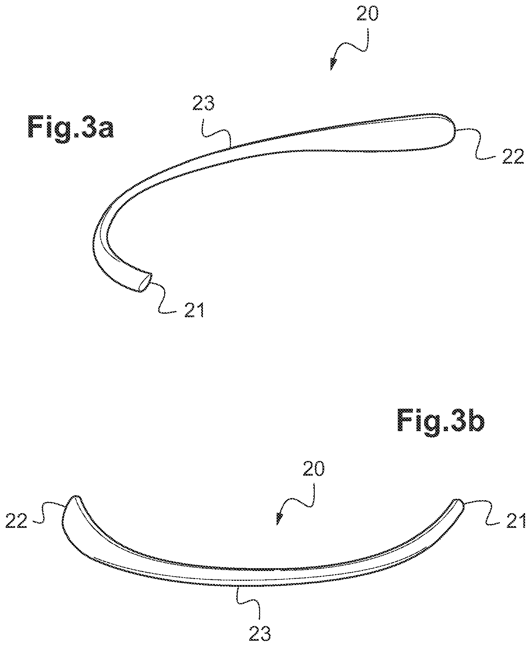

Les figures 1, 2, 3a et 3b se rapportant à un même mode de réalisation, elles seront commentées simultanément.

Dans ce mode de réalisation, un soutien-gorge personnalisé 40 comprend deux bonnets 41,42, des bretelles réglables 44 et un dispositif de maintien dorsal 46 pour tenir le soutien-gorge 40 contre la poitrine de l'utilisatrice.

L'invention n'est cependant pas limitée à un soutien-gorge à bretelles et concerne aussi un soutien-gorge sans bretelle avec ou sans bande dorsale.

Les bonnets 41, 42 sont reliés entre eux par une fixation amovible 47 sensiblement au voisinage du sternum 50 d'une utilisatrice portant le soutien-gorge 40. Chaque bonnet 41, 42 peut être d'une taille et d'une forme différente de l'autre bonnet 41, 42, de sorte à s'adapter aux dissymétries mammaires d'une même utilisatrice.

La fixation amovible 47 est dans ce mode de réalisation une fixation d'agrafe relativement commune pour les soutiens-gorge. Toutefois l'invention n'est pas limitée à ce type de fixation et peut être obtenue par tout moyen de fixation connu de l'homme du métier, tel qu'une fixation par scratch, par exemple par boucle formant scratch, par bouton pression, par bouton classique, ou tout autre type de fermoir. En particulier le mode de fixation peut être sélectionné selon des critères de fermeté de fixation, de confort ainsi que selon des critères esthétiques et/ou de discrétion.

La fixation sternale amovible 47 des deux bonnets 41, 42 constitue dans ce mode de réalisation le seul élément à manipuler pour installer le soutien-gorge sur la poitrine de l'utilisatrice. Autrement dit, le soutien-gorge selon ce mode de réalisation est destiné à être refermé par l'utilisatrice au niveau de son sternum, soit par la fixation amovible 47 de l'entre-bonnet.

Les autres parties amovibles du soutien-gorge sont destinées à permettre une personnalisation et un réglage accru du soutien-gorge.

Toutefois l'invention n'est pas limitée à ce seul mode d'installation du soutien-gorge sur la poitrine de l'utilisatrice, on peut notamment prévoir l'installation du soutien-gorge par ouverture du dispositif de maintien dorsal 46 décrit ci-après.

Le dispositif de maintien dorsal 46, comprenant deux bandes latérales 45, solidaires chacune d'un bonnet 41, 42, solidarisées chacune à la bordure inférieure 410, 420 dudit bonnet correspondant 41, 42, sensiblement au voisinage de l'extrémité latérale axillaire 411, 421 dudit bonnet correspondant 41, 42, et une bande dorsale amovible 43, adaptée pour être fixé de manière amovible aux deux bandes latérales 45 de fixation, à leurs extrémités libres 450 respectives.

La bande dorsale 43 est sélectionnée en fonction de la morphologie de l'utilisatrice de sorte à permettre un réglage optimal du soutien-gorge sur l'utilisatrice.

Ici la bande dorsale 43 est faite d'un matériau élastique, par exemple un même matériau que celui des bonnets 41,42, afin d'améliorer le confort de port de soutien-gorge de l'utilisatrice.

Les bandes latérales 45 solidaires de chaque bonnet 41, 42 sont d'une longueur standard, par exemple s'étendant en direction du dos de l'utilisatrice, comprise entre 5 cm et 20 cm. L'adaptation du soutien-gorge 40 à la morphologie de l'utilisatrice, en particulier en ce qui concerne son tour de poitrine, est effectuée par sélection d'une bande dorsale 43 de longueur et d'épaisseur adaptée pour permettre un maintien optimal, non compressif mais ferme contre le dos de l'utilisatrice.

Les bandes latérales 45 peuvent être faites d'un assemblage de pièces cousues ou thermocollées les unes aux autres afin d'assurer une fonction esthétique et de confort optimisé, par exemple en comprenant un empiècement transparent.

Les bretelles amovibles 44, sont fixées chacune de manière amovible sur un bonnet 41, 42 correspondant, sur une partie haute du bonnet correspondant 41, 42, dit haut-bonnet 53, sensiblement opposée à la partie basse du bonnet 41, 42, dit bas-bonnet 54.

Par ailleurs les bretelles 44 sont aussi fixées de manière amovible à la bande de fixation dorsale 43.

Les bretelles 44 sont dans ce mode de réalisation fortement résistantes, avec une faible élasticité. Le réglage de longueur de bretelles 44 s'effectue selon la pratique habituelle de l'art antérieur, à savoir un anneau régleur qui peut coulisser sur toute la longueur de la bretelle 44.

Ainsi, les bretelles 44 s'étendent entre le haut-bonnet du soutien-gorge et le dos de l'utilisatrice, passant chacune par-dessus une épaule de l'utilisatrice, de sorte à assurer un maintien sensiblement vertical du soutien-gorge, étant pris dans l'invention pour référence verticale la hauteur de l'utilisatrice en position debout. Ainsi les bretelles peuvent être sélectionnées en tenant compte de la hauteur du buste de l'utilisatrice, en particulier de la distance entre les épaules et le sternum de l'utilisatrice,

Les bretelles 44 peuvent être fixées de manière amovible à la bande dorsale 43, après avoir été croisées ou non dans le dos de l'utilisatrice.

Lors de la conception d'un soutien-gorge 40 personnalisé pour une utilisatrice on peut sélectionner d'une part deux bonnets 41, 42 adaptés que nous allons décrire plus précisément ci-après, une bande dorsale 43 pour optimiser le maintien dorsal, et deux bretelles 44 amovibles pour améliorer le maintien vertical du soutien-gorge 40, notamment en tenant compte de la hauteur du buste de l'utilisatrice et de sa morphologie.

Les fixations des bretelles 44 aux bonnets 41, 42 et de la bande dorsale 43 aux bandes latérales 45 associées, peuvent être faite par les moyens de fixation amovibles décrits précédemment pour la fixation des deux bonnets 41, 42 entre eux.

Chaque bonnet 41, 42 est fait d'un matériau élastique, par exemple un matériau bi-dynamique (connu sous le terme anglophone de bi-stretch), en particulier de l'élasthanne ou tout autre matériau adapté.

On peut par exemple prévoir un taux d'élasticité du tissu formant chaque bonnet 41, 42 compris entre 15% et 35%, par exemple un taux d'élasticité de 20%.

Chaque bonnet 41, 42 est destiné à recevoir un sein de l'utilisatrice portant le soutien-gorge 40.

Afin d'améliorer l'installation de chaque sein de l'utilisatrice dans son bonnet associé, le soutien-gorge 40 comprend pour chaque bonnet 41, 42 un organe d'adaptation 20 du bonnet 41, 42 à la forme du sein.

L'organe d'adaptation 20 du bonnet 41, 42 à la forme du sein comprend une tige courbe 20 en matériau plastique.

Cette tige courbe 20 est réalisée de sorte à épouser le sillon sous-mammaire d'une utilisatrice, jusqu'à ses côtes. La tige courbe 20 se distingue d'une armature classique d'un soutien-gorge de l'art antérieur, aussi connu sous le nom d'armature baleine, en ce qu'elle ne contraint pas le sein dans une position particulière. Au contraire, la tige courbe 20 épouse la forme de la naissance du sein entre le sternum 50 de l'utilisatrice et le creux axillaire 52 de l'utilisatrice, en épousant entre ces deux extrémité la naissance du sein contre la paroi thoracique inférieure, appelée sillon sous-mammaire 51.

Ainsi, la tige courbe 20, s'étendant entre une extrémité sternale 21 et une extrémité axillaire 22, peut être positionnée sous le sein sans que ce dernier ne soit déformé par cette tige courbe 20.

Cette tige courbe 20 présente une section droite sensiblement plate de sorte à pouvoir être posée à plat contre le thorax et les côtes de l'utilisatrice.

La courbure de la tige courbe 20 est une courbure tridimensionnelle, et non une courbure dans un plan bidimensionnel telles que sont classiquement réalisées les armatures de l'art antérieur.

Cette courbure tridimensionnelle permet notamment à la tige courbe 20 de reposer à son extrémité axillaire, à plat contre la partie latérale de la cage thoracique de l'utilisatrice, sous le creux axillaire, aussi appelé aisselle.

Afin d'assurer une coopération optimale entre le bonnet et la tige courbe 20, et par conséquent un confort optimal pour l'utilisatrice, chaque bonnet 41, 42 présente une extension de matière latérale axillaire permettant au bonnet de venir en retour contre les côtes de l'utilisatrice jusque sous le creux axillaire 52.

On entend par les formules « en retour contre les côtes », "contre les côtes" et "jusqu'aux côtes" le fait que le bonnet, ou la tige courbe, vienne reposer contre une partie latérale de la cage thoracique de l'utilisatrice, s'étendant sensiblement perpendiculairement au sternum.

Autrement dit, le bonnet 41, 42, fait d'un matériau souple et élastique, recouvre le sein de l'utilisatrice entre le sternum 50 et le creux axillaire 52, épousant sous la contrainte de la tige courbe 20 le sillon sous-mammaire 51 de l'utilisatrice, et venant en repli contre les côtes de l'utilisatrice sous le creux axillaire 52.

À son extrémité axillaire 22, la tige courbe 20 présente une portion élargie, formant spatule, pour reposer de manière indolore contre les côtes de l'utilisatrice.

L'extrémité sternale 21 de la tige courbe 20 peut aussi présenter une extrémité élargie par rapport à la largeur de la portion principale 23 de la tige courbe 20. Cependant pour des raisons essentiellement esthétiques et de discrétion, on privilégie un faible épaississement de l'extrémité sternale 21, tout en s'assurant cependant que cette extrémité repose à plat contre le sternum de l'utilisatrice.

Chaque tige courbe 20 est installée de manière amovible dans un bonnet correspondant 41, 42. Ceci permettant de retirer les tiges courbes 20 du soutien-gorge 40 par exemple avant de les laver, pour éviter d'abîmer les matériaux tels que les dentelles employées. En outre, le fait de pouvoir retirer les tiges courbes 20 permet de les utiliser sur divers soutiens-gorge. Ainsi, on peut obtenir une seule paire de tiges courbes 20 personnalisées, et les adapter à une pluralité de bonnets 41, 42 compatibles.

Pour permettre une installation simple et robuste de la tige courbe 20 dans le bonnet correspondant 41, 42, le bonnet comprend sur sa partie inférieure, dit bas-bonnet 410, 420, un fourreau 413, 423, formé dans ce mode de réalisation d'un ourlet, soit un repli de matière du bonnet 41, 42 cousu sur lui-même.

Toutefois l'invention n'est pas limitée à la réalisation d'un ourlet du bas-bonnet pour former le fourreau 413, 423. On peut notamment prévoir de coudre, de coller ou de solidariser par tout moyen connu, un fourreau 413, 423 pour recevoir la tige courbe 20 sur le bas bonnet 410, 420.

Le fourreau 413, 423 est fait d'un matériau bi-dynamique tel que celui du bonnet correspondant 41, 42, et comprend dans ce mode de réalisation une doublure élastique, aussi appelée gaine élastique, s'étendant sur tout ou partie de la longueur du fourreau 413, 423 pour augmenter les frottements et par conséquent l'effet de maintien de la tige courbe 20 quand elle est insérée dans le fourreau 413, 423.

Le fourreau 413, 423 présente au moins une ouverture pour permettre l'insertion et le retrait de la tige courbe 20. Dans ce mode de réalisation l'ouverture est réalisée à l'extrémité axillaire du bonnet 41, 42. Toutefois on peut prévoir une ouverture réalisée à l'extrémité sternale du bonnet 41, 42 ou prévoir une ouverture à chaque extrémité de la bordure inférieure du bonnet 41, 42.

Pour s'assurer que la tige courbe 20 soit insérée par l'utilisatrice correctement dans le fourreau 413, 423, on prévoir un moyen détrompeur, ici une gravure réalisée sur la tige courbe 20, permettant de déterminer le sens d'insertion de la tige courbe 20 dans le fourreau 413, 423 associé.

Cette gravure permet notamment à l'utilisatrice de savoir à quel sein correspond la tige courbe 20, par exemple une gravure indiquant les termes gauche et droite, ou toute autre marque reconnaissable. En outre la gravure peut être réalisée sur une seule face de la tige courbe 20 de sorte que l'utilisateur est apte à déterminer comment insérer la tige dans le fourreau par rapport à la face de gravure ; par exemple la face de gravure devant venir s'appliquer contre le thorax de l'utilisatrice.

Chaque tige courbe 20 est faite d'un matériau lissé, de telle sorte que l'insertion et le retrait dans le fourreau 413, 423 est relativement simple.

L'invention concerne aussi le procédé d'obtention d'un tel soutien-gorge 40.

Le procédé d'obtention d'un soutien-gorge 40 comprend une étape d'obtention d'une photographie de chaque sein d'une utilisatrice. Cette étape est dans ce mode de réalisation mise en œuvre par l'utilisatrice elle-même. À cet effet un programme informatique est installé sur une plateforme informatique de l'utilisatrice, par exemple un ordinateur personnel ou, préférentiellement, sur un smartphone ou une tablette.

Toutefois cette étape n'est pas limitée à l'obtention des photographies par l'utilisatrice elle-même ; et peut comprendre une étape d'acquisition des données morphologiques de l'utilisatrice par scanner 3D ou toute autre solution connue dans l'état de la technique.

Le programme informatique est ensuite conformé pour traiter les photographies et mettre en œuvre les étapes de traitement suivantes du dispositif ou transmettre les photographies à un serveur distant sécurisé pour traiter les photos et mettre en œuvre les étapes de traitement suivantes du dispositif.

Le procédé met ensuite en œuvre une étape d'acquisition de données morphologiques de l'utilisatrice telle que sa taille et son poids. Cette étape peut être réalisée soit par traitement des images photographiques obtenues par l'utilisatrice, ou selon les alternatives par traitement des données de scanner 3D et toute autre technique d'imagerie connue, soit par saisie de ces informations directes par l'utilisatrice.

Ensuite on met en œuvre une étape de traitement de l'image de chaque sein, de sorte à définir des paramètres représentatifs du volume, de la forme et de la courbure de chaque sein, ainsi que la définition de la courbure tridimensionnelle du sillon sous-mammaire. Les données définies ne sont pas limitées à celles indiquées, et peuvent en comprendre d'autres pour affiner la personnalisation du soutien-gorge.

Ensuite on met en œuvre une étape de sélection d'un bonnet adapté en fonction des données morphologiques et des photographies obtenues. Ainsi cette étape permet de définir le bonnet optimal pour l'utilisatrice sans tenir compte des données classiques de tailles de bonnets connus de l'art antérieur.

Puis on met en œuvre une étape de définition d'un organe d'adaptation pour chaque bonnet associé en fonction des données morphologique et des photographies obtenues, comprenant la définition de la courbure tridimensionnelle de la tige courbe et de l'élargissement latéral axillaire de ladite tige courbe. Cette étape permet de définir une tige courbe en fonction des données morphologiques de l'utilisatrice, venant épouser la forme du sillon sous-mammaire, qui permettra de contraire le bonnet sélectionné, fait d'un matériau élastique, à la forme du sein. Ceci diffère de l'art antérieur dans lequel le raisonnement inverse est appliqué, dans lequel l'armature contraint le sein à la forme du bonnet.

Enfin le procédé met en œuvre une étape de détermination de bretelles et d'une bande dorsale adaptée, tenant compte des données morphologique de l'utilisatrice, pour permettre un ajustement et un maintien optimal du soutien-gorge, et par conséquent un confort optimal.

L'invention concerne aussi un procédé de fabrication d'un organe d'adaptation 20 d'un bonnet de soutien-gorge à la forme d'un sein, ici une tige courbe 20 comprenant une étape de réception de données de définition dudit organe d'adaptation 20 comprenant des données de courbure tridimensionnelles de la tige courbe, dans ce mode de réalisation des données paramétriques suivi d'une étape d'impression 3D de ladite tige courbe 20.

L'impression 3D pouvant notamment être mis en œuvre par l'une des techniques parmi :
- Une fabrication additive par dépôt de fils (FDM) ;
- Un frittage sélectif de poudre (SLS) ;
- Une solidification d'une résine par laser UV (SLA)
- Une solidification d'une résine par image UV (CLIP) ;
- Un laminage par addition de couches découpées par laser (LOM) ;
- Une solidification d'une résine par photo-polymérisation (DLP) ; ou encore
- Une technique de projection de liant.

On peut prévoir que la tige souple 20 est faite en un matériau polyamide, en silicone, polyuréthanes thermoplastiques (TPU), acrylonitrile butadiène, styrène (ABS) ou tout autre matériau adapté.

L'invention permet ainsi à des utilisatrices de soutien-gorge d'obtenir un soutien-gorge personnalisé, présentant un confort et un maintien optimal, par l'ensemble de ses parties amovibles, bretelles 44, bande dorsale 43, bonnets 41, 42 indépendants. En outre le soutien-gorge 40 selon l'invention assure un drainage lymphatique préservé et une forme de sein naturelle par l'emploi de la tige courbe 20 selon l'invention.

De plus, pour le manufacturier, cette solution permet de s'affranchir des contraintes de production liées à la multiplicité des tailles de soutiens-gorge, les tailles comprenant la combinatoire de tour de poitrine et de bonnet. Ce qui permet une production plus économique, une meilleure gestion des stocks, et une offre mieux adaptée aux attentes des utilisatrices, en réduisant le nombre de tailles de bonnets, les bonnets pouvant être adaptés sur mesure par l'organe d'adaptation 20.

## Revendications

1. Soutien-gorge (40) personnalisé pour préserver la santé des seins d'une utilisatrice, comprenant deux bonnets (41, 42) pour recevoir chacun un sein de l'utilisatrice, chaque bonnet (41, 42) étant fait d'un matériau élastique, où chaque bonnet (41, 42) est amovible et en ce que le soutien-gorge (40) comprend pour chaque bonnet (41, 42) un organe d'adaptation (20) du bonnet (41, 42) à la forme du sein, ledit organe d'adaptation (20) comprenant une tige courbe (20) obtenue sur mesure de l'utilisatrice, ladite tige courbe (20) étant adaptée pour épouser sur toute sa longueur la forme du sillon sous-mammaire jusqu'aux côtes (51) de ladite utilisatrice, et s'étendant depuis le voisinage du sternum (50) de l'utilisatrice jusqu'au voisinage du creux axillaire (52) de l'utilisatrice, de sorte que ladite tige courbe (20) étire le bonnet (41, 42) pour épouser la forme du sein;
**caractérisé en ce que** ledit organe d'adaptation (20) du bonnet (41, 42) au sein de l'utilisatrice présente une forme sensiblement plate et une forme élargie à son extrémité axillaire (411, 421) au voisinage du creux axillaire (52), sensiblement en forme de spatule, pour reposer à plat contre les côtes de l'utilisatrice, en direction du creux axillaire (52) de sorte à améliorer la répartition du poids du sein.

2. Soutien-gorge (40) selon la revendication 1, **caractérisé en ce que** chaque bonnet (41, 42) comprend dans sa bordure inférieure (410, 420), un fourreau pour recevoir ladite tige courbe (20) associée.

3. Soutien-gorge (40) selon la revendication 2, **caractérisé en ce que** ledit fourreau est fait d'un ourlet sur toute la longueur de la bordure inférieure (410, 420) dudit bonnet (41, 42), présentant au moins une ouverture latérale pour insérer ou retirer ladite tige courbe (20), et **en ce qu'**il comprend une gaine élastique dans ledit ourlet de sorte qu'il assure un maintien ferme de la tige courbe (20) dans ledit bonnet.

4. Soutien-gorge (40) selon l'une quelconque des revendications 1 à 3, **caractérisé en ce que** chaque bonnet (41, 42) présente une portion latérale axillaire adaptée pour venir reposer en retour contre les côtes de l'utilisatrice sous le creux axillaire (52).

5. Soutien-gorge (40) selon l'une quelconque des revendications 1 à 4, **caractérisé en ce qu'**il comprend des bretelles (44) réglables amovibles.

6. Soutien-gorge (40) selon l'une quelconque des revendications 1 à 5, **caractérisé en ce que** le soutien-gorge comprend un dispositif de maintien dorsal (46), comprenant deux bandes latérales (45) de fixation, solidaires chacune d'un bonnet (41, 42), solidarisées chacune à la bordure inférieure (410, 420) dudit bonnet (41, 42), sensiblement au voisinage de l'extrémité latérale axillaire dudit bonnet (41, 42), et une bande dorsale amovible (43), adaptée pour être fixé de manière amovible aux deux bandes latérales (45) de fixation, à leurs extrémités libres respectives.

7. Soutien-gorge (40) selon la revendication 6, **caractérisé en ce que** ladite bande dorsale amovible (46) est faite d'un matériau élastique.

8. Procédé d'obtention d'un soutien-gorge (40) selon l'une quelconque des revendications 1 à 7 **caractérisé en ce qu'**il comprend :
- une étape d'obtention d'une photographie de chaque sein d'une utilisatrice ;
- une étape d'acquisition de données morphologiques de l'utilisatrice telle que sa taille et son poids ;
- une étape de traitement de l'image de chaque sein, de sorte à définir des paramètres représentatifs du volume, de la forme et de la courbure de chaque sein, ainsi que la définition de la courbure tridimensionnelle du sillon sous-mammaire (51) ;
- pour chaque sein, une étape de sélection d'un bonnet (41, 42) adapté en fonction des données morphologiques et des photographies obtenues ;
- pour chaque sein, une étape de définition d'un organe d'adaptation (20) du bonnet (41, 42) associé à la forme du sein correspondant en fonction des données morphologique et des photographies obtenues, comprenant la définition de la courbure tridimensionnelle de la tige courbe (20) et de l'élargissement latéral axillaire (22) de ladite tige courbe (20) ; et
- une étape de détermination de bretelles (44) et d'une bande dorsale (43) adaptée.

9. Procédé de fabrication d'un organe d'adaptation (20) d'un bonnet de soutien-gorge (40) selon l'une quelconque des revendications 1 à 7, **caractérisé en ce qu'**il comprend :
- une étape de réception de données de définition dudit organe d'adaptation (20) comprenant des données de courbure tridimensionnelles de la tige courbe (20), par exemple des données paramétriques ; et
- une étape d'impression 3D de ladite tige courbe (20).

## Patentansprüche

1. Maßgefertigter Büstenhalter (40), um die Gesundheit der Brüste einer Trägerin zu bewahren, umfassend zwei Körbchen (41, 42), um jeweils eine Brust der Trägerin aufzunehmen, wobei jedes Körbchen (41, 42) aus einem elastischen Material besteht, wobei jedes Körbchen (41, 42) abgenommen werden kann, und dadurch, dass der Büstenhalter (40) für jedes Körbchen (41, 42) ein Element zum Anpassen (20) des Körbchens (41, 42) an die Form der Brust umfasst, wobei das Anpasselement (20) eine gekrümmte Stange (20) umfasst, die für die Trägerin auf Maß erhalten wird, wobei die gekrümmte Stange (20) geeignet ist, sich über ihre gesamte Länge bis an die Seiten (51) der Trägerin der Form der Unterbrustfalte anzupassen, und sich so vom Bereich des Brustbeins (50) der Trägerin bis zum Bereich der Achselhöhle (52) der Trägerin erstreckt, dass die gekrümmte Stange (20) das Körbchen (41, 42) streckt, um es der Form der Brust anzupassen;
**dadurch gekennzeichnet, dass** das Element zum Anpassen (20) des Körbchens (41, 42) an die Brust der Trägerin eine im Wesentlichen flache Form, und an seinem achselseitigen Ende (411, 421) im Bereich der Achselhöhle (52) eine verbreiterte Form, im Wesentlichen in Form eines Spatels aufweist, um in Richtung der Achselhöhle (52) flach an den Seiten der Trägerin anzuliegen, sodass die Verteilung des Gewichts der Brust verbessert wird.

2. Büstenhalter (40) nach Anspruch 1, **dadurch gekennzeichnet, dass** jedes Körbchen (41, 42) an seinem unteren Rand (410, 420) ein Futteral umfasst, um die zugehörige gekrümmte Stange (20) aufzunehmen.

3. Büstenhalter (40) nach Anspruch 2, **dadurch gekennzeichnet, dass** das Futteral aus einem Tunnelsaum über die gesamte Länge des unteren Randes (410, 420) des Körbchens (41, 42) besteht, welcher mindestens eine seitliche Öffnung aufweist, um die gekrümmte Stange (20) einzuführen oder herauszuziehen, und dadurch, dass es in dem Tunnelsaum eine elastische Ummantelung umfasst, sodass es einen festen Halt der gekrümmten Stange (20) im Körbchen gewährleistet.

4. Büstenhalter (40) nach einem der Ansprüche 1 bis 3, **dadurch gekennzeichnet, dass** jedes Körbchen (41, 42) einen seitlichen Achselabschnitt aufweist, der seinerseits geeignet ist, unter der Achselhöhle (52) an den Seiten der Trägerin anzuliegen.

5. Büstenhalter (40) nach einem der Ansprüche 1 bis 4, **dadurch gekennzeichnet, dass** er abnehmbare verstellbare Träger (44) umfasst.

6. Büstenhalter (40) nach einem der Ansprüche 1 bis 5, **dadurch gekennzeichnet, dass** der Büstenhalter eine Rückenhaltevorrichtung (46) umfasst, die zwei seitliche Befestigungsbänder (45), welche jeweils fest mit einem Körbchen (41, 42) verbunden und jeweils im Wesentlichen im Bereich des achselseitigen seitlichen Endes des Körbchens (41, 42) am unteren Rand (410, 420) des Körbchens (41, 42) festgemacht sind, und ein abnehmbares Rückenband (43) umfasst, das geeignet ist, in abnehmbarer Art und Weise an deren jeweiligen freien Enden an den zwei seitlichen Befestigungsbändern (45) befestigt zu werden.

7. Büstenhalter (40) nach Anspruch 6, **dadurch gekennzeichnet, dass** das abnehmbare Rückenband (46) aus einem elastischen Material besteht.

8. Verfahren zum Erhalten eines Büstenhalters (40) nach einem der Ansprüche 1 bis 7, **dadurch gekennzeichnet, dass** es umfasst:
- einen Schritt des Erhaltens eines Fotos jeder Brust einer Trägerin;
- einen Schritt des Erfassens von morphologischen Daten der Trägerin, wie etwa deren Größe und deren Gewicht;
- einen Schritt des Verarbeitens des Bildes jeder Brust, um Parameter, die für das Volumen, die Form und die Krümmung jeder Brust repräsentativ sind, sowie die Definition der dreidimensionalen Krümmung der Unterbrustfalte (51) zu definieren;
- für jede Brust einen Schritt des Auswählens eines geeigneten Körbchens (41, 42) in Abhängigkeit von den morphologischen Daten und den erhaltenen Fotos;
- für jede Brust einen Schritt des Definierens eines Elements zum Anpassen (20) des zugehörigen Körbchens (41, 42) an die Form der entsprechenden Brust in Abhängigkeit von den morphologischen Daten und den erhaltenen Fotos, der das Definieren der dreidimensionalen Krümmung der gekrümmten Stange (20) und der achselseitigen seitlichen Verbreiterung (22) der gekrümmten Stange (20) umfasst; und
- einen Schritt des Bestimmens von Trägern (44) und eines geeigneten Rückenbandes (43).

9. Verfahren zur Herstellung eines Elements zum Anpassen (20) eines Körbchens eines Büstenhalters (40) nach einem der Ansprüche 1 bis 7, **dadurch gekennzeichnet, dass** es umfasst:
- einen Schritt des Empfangens von Daten zum Definieren des Anpasselements (20), welche Daten der dreidimensionalen Krümmung der gekrümmten Stange (20), zum Beispiel parametrische Daten, umfassen; und
- einen Schritt des 3D-Drucks der gekrümmten Stange (20) .

## Claims

1. Customised brassiere (40) for maintaining the health of a user's breasts, comprising two cups (41, 42) for each receiving a breast of the user, each cup (41, 42) being made of an elastic material, where each cup (41, 42) is detachable and in that the brassiere (40) comprises for each cup (41, 42) an element (20) for fitting the cup (41, 42) to the form of the breast, said fitting element (20) comprising a curved rod (20) produced to the measurements of the user, said curved rod (20) being adapted to contour over its entire length the shape of the inframammary fold up to the ribs (51) of said user, and extending from the vicinity of the sternum (50) of the user to the vicinity of the axillary hollow (52) of the user, such that said curved rod (20) stretches the cup (41, 42) in such a way that it matches the shape of the breast;
**characterised in that**
said element for fitting (20) the cup (41, 42) to the breast of the user have a substantially flat form and being wider at its axillary end (411, 421) in the vicinity of the axillary hollow (52), substantially in the form of a spatula, for resting flat against the ribs of the user, in the direction of the axillary hollow (52) so as to improve the weight distribution of the breast.

2. Brassiere (40) according to claim 1, **characterised in that** each cup (41, 42) comprises on its lower edge (410, 420) a sleeve for receiving the said associated curved rod (20).

3. Brassiere (40) according to claim 2, **characterised in that** said sleeve is made from an hemline along the entire length of the lower edge (410, 420) of said cup (41, 42), having at least one lateral opening for inserting or removing said curved rod (20), and **in that** it comprises an elastic sheath in said hemline in order to ensure a firm support of the curved rod (20) in said cup.

4. Brassiere (40) according to any of claims 1 to 3, **characterised in that** each cup (41, 42) has a lateral axillary portion which is adapted to rest in turn against the ribs of the user below the axillary hollow (52).

5. Brassiere (40) according to any of claims 1 to 4, **characterised in that** it comprises detachable, adjustable straps (44).

6. Brassiere (40) according to any of claims 1 to 5, **characterised in that** the brassiere comprises a back-support device (46), comprising two lateral securing bands (45), each joined to a cup (41, 42), each connected to the lower edge (410, 420) of said cup (41, 42), essentially in the vicinity of the lateral axillary end of said cup (41, 42), and a detachable back band (43), which is adapted to be fixed in a detachable manner to the two lateral securing bands (45) at their respective free ends.

7. Brassiere (40) according to claim 6, **characterised in that** said detachable back band (46) is made from an elastic material.

8. Method for obtaining a brassiere (40) according to any of claims 1 to 7 **characterised in that** it comprises:
- a step of obtaining a photograph of each breast of a user;
- a step of acquiring morphological information about the user, such as their size and weight;
- a step of processing the image of each breast, so as to define the representative parameters of the volume, form and curvature of each breast, as well as the definition of the three-dimensional curve of the inframammary fold (51);
- for each breast, a step of selecting a cup (41, 42) which is adapted according to the morphological information and the photographs obtained;
- for each breast, a step of defining an element (20) for fitting the cup (41, 42) associated with the form of the corresponding breast according to the morphological information and photographs taken, comprising the definition of the three-dimensional curve of the curved rod (20) and the lateral axillary widening (22) of said curved rod (20); and
- a step of determining straps (44) and a suitable back band (43).

9. Method for producing an element for fitting (20) a brassiere cup (40) according to any of claims 1 to 7, **characterised in that** it comprises:
- a step of receiving information defining said fitting element (20) comprising information on the three-dimensional curve of the curved rod (20), for example parametric information; and
- a step of 3D printing said curved rod (20).
